# EUROPÄISCHE PATENTSCHRIFT

(11) **EP 2 325 028 B1**
(45) Veröffentlichungstag und Bekanntmachung des Hinweises auf die Patenterteilung: **25.07.2012**
(21) Anmeldenummer: 10189081.2
(22) Anmeldetag: 27.10.2010
(51) Int. Cl.: B60C 27/08, B60C 27/06

(54) **Gleitschutzkette mit Greifbolzen und Greifstegen**
Ant-skid chain with grip bolts and grip links
Chaîne antidérapante dotée de boulons de saisie et d'âmes de saisie

(30) Priorität: 18.11.2009 DE 202009015608 U
(43) Veröffentlichungstag der Anmeldung: 25.05.2011
(73) Patentinhaber: RUD Ketten Rieger & Dietz GmbH u. Co. KG, 73432 Aalen (DE)
(72) Erfinder: Rieger, Johannes Werner, 73447, Oberkochen (DE)
(74) Vertreter: Grünecker, Kinkeldey, Stockmair & Schwanhäusser

(56) Entgegenhaltungen:
- US-A- 5 423 365
- US-E- R E28 898

## Beschreibung

Die Erfindung betrifft eine Gleitschutzkette mit einer Vielzahl von im Wesentlichen schräg bis quer zur Umfangsrichtung eines Fahrzeugreifens verlaufenden Traktionssträngen, die Kettenglieder umfassen, die jeweils an wenigstens einem Schenkel mit einem sich im montierten Zustand der Gleitschutzkette von einer Lauffläche weg erstreckenden, punktuell auf die Fahrbahn aufsetzend und als Kralle auf die Fahrbahn wirkend ausgestalteten Greifbolzen versehen sind.

Gleitschutzketten sind aus dem Stand der Technik, beispielsweise aus den Patentveröffentlichungen und Produkten der Anmelderin sowie der Firmen Erlau und Weissenfelds bekannt. Gleitschutzketten werden eingesetzt, um die Gefahr des Durchrutschens insbesondere der angetriebenen Räder eines Kraftfahrzeuges auf rutschigem oder weichem Untergrund, wie beispielsweise Schnee, Schlamm und Eis zu vermeiden.

Bei einer Vielzahl von Gleitschutzketten ist auf der Lauffläche, mit der der Fahrzeugreifen auf dem die Fahrbahn bildenden Untergrund abrollt, ein Laufnetz aus Kettensträngen angeordnet. Üblicherweise weisen Laufnetze von Gleitschutzketten eine netzartige Struktur auf, die durch eine Verbindung einzelner Kettenstränge zu einem auf der Lauffläche des Reifens angeordneten Netz entsteht. Mehrere Einzelstränge sind dabei an Knotenstellen des Laufnetzes miteinander verbunden. Während des Abrollens des Fahrzeugreifens kommt das Laufnetz zwischen Lauffläche und Fahrbahn zu liegen und wird somit durch das Gewicht des Fahrzeuges zumindest bei weichem Untergrund in den diesen hineingedrückt. Die Kettenstränge können aus unterschiedlichen Arten von Kettengliedern aufgebaut sein und neben länglichen Kettengliedern und Ringgliedern auch aufgesetzte Zusatzelemente umfassen, welche die Traktion verbessern.

Um den Verschleiß insbesondere der mit der Fahrbahn in Berührung kommenden Kettenglieder zu verringern, können die Kettenglieder mit Verdickungen oder Fortsätzen versehen sein, die auf die Kettenglieder aufgeschweißt werden. Derartige Verdickungen oder Fortsätze sind in der DE 2 924 511 A1 gezeigt.

In der US 4,361,178 und in der US Re. 28,898 sind Gleitschutzketten mit einem Laufnetz beschrieben, dessen Kettenglieder aufgeschweißte Bolzen aufweisen, die sich von der Lauffläche des Fahrzeugreifens weg erstrecken, um die Traktion zu verbessern. In der gattungsbildenden US 5,423,365 sind ringförmige Knotenpunkte einer Gleitschutzkette mit aufgeschweißten stegförmigen Elementen versehen.

Ein Nachteil der aus dem Stand der Technik bekannten Gleitschutzketten der oben genannten Art ist ihre verringerte Traktion und verschlechterte Spurführung auf befestigtem Untergrund. Die Greifbolzen können bei befestigtem Untergrund nicht in diesem eindringen und somit die Traktion nicht in dem Maße verbessern, wie dies auf unbefestigtem Untergrund möglich ist.

In Anbetracht dieser Nachteile der bekannten Gleitschutzketten liegt der Erfindung die Aufgabe zugrunde, eine Gleitschutzkette zu schaffen, die bei guter Spurführung auf weichem und befestigtem Untergrund verwendet werden kann.

Diese Aufgabe wird für eine Gleitschutzkette der eingangs genannten Art erfindungsgemäß dadurch gelöst, dass die Gleitschutzkette wenigstens ein Greifglied mit einem sich im montierten Zustand von der Lauffläche weg erstreckenden Greifsteg aufweiset, welcher flächig auf die Fahrbahn aufsetzend und als Schaufel auf die Fahrbahn wirkend ausgestaltet ist, und dass das Greifglied beide Längsschenkel eines liegenden Kettengliedes der Gleitschutzkette umschließt.

Ähnlich der Wirkung von Spikes erzeugt die punktförmige Auflage der Greifbolzen einen relativ hohen Druck auf die Fahrbahn, der ein Eindringen der Greifbolzen in die Fahrbahnoberfläche fördert und folglich insbesondere auf relativ hartem, beispielsweise vereistem Untergrund die Traktion des Fahrzeugreifens verbessert. Somit können sich die Greifbolzen wie Krallen in den Untergrund eingraben und ein Gleiten des Fahrzeugreifens verhindern. Auf sehr weichem, nachgiebigen Untergrund ist die Verbesserung der Traktion durch Greifbolzen jedoch begrenzt.

Die Greifstege bieten gegenüber den Greifbolzen eine deutlich breitere Auflagefläche, durch welche die Traktion bei geringem oder keinem Eindringen der Gleitschutzkette in die Fahrbahnoberfläche gegenüber einer lediglich mit Greifbolzen versehenen Gleitschutzkette verbessert ist. Die Greifstege sind bei montierter Gleitschutzkette vorzugsweise schaufelartig angeordnet. Die Greifstege können sich außerdem bevorzugt quer zur Umfangsrichtung des Fahrzeugrades auf der Lauffläche des Fahrzeugrades erstrecken. Somit wirken die Greifstege beim Eindringen in den Untergrund wie eine Schaufel, wodurch der während des Einsatzes der Gleitschutzkette vorübergehend entstehende Formschluss zwischen Gleitschutzkette und Untergrund und somit die Traktion des Fahrzeugreifens deutlich verbessert ist. Somit kann auch auf weichem Untergrund eine verbesserte Traktion erreicht werden.

Das Greifglied kann von einem der Lauffläche des Fahrzeugreifens zugeordneten, im Wesentlichen U-förmigen Unterteil und einem mit den Enden des Unterteils verbundenen, der Fahrbahn zugewandten Greifsteg gebildet sein. Der Greifsteg kann beispielsweise durch eine Schweißverbindung mit dem U-förmigen Unterteil verbunden sein.

Gemäß einer weiteren vorteilhaften Ausgestaltung der erfindungsgemäßen Gleitschutzkette kann der wenigstens eine Greifsteg insbesondere quer zur Umfangsrichtung des Fahrzeugreifens bzw. quer zur Fahrtrichtung angeordnet sein. Der Greifsteg bildet somit einen schaufelartigen Fortsatz auf der Lauffläche, der die Traktion auch auf weichem Untergrund deutlich erhöht. Bevorzugt ist eine Vielzahl von Greifstegen an dem Umfang des Fahrzeugreifens angeordnet, die zusammen mit dem Fahrzeugreifen wie ein Schaufelrad auf den Untergrund wirken.

Um das Greifglied mit der Gleitschutzkette zu verbinden, kann dieses als Kettenglied in einen Kettenstrang eingebunden werden. Insbesondere bei einer Einbindung des Greifgliedes in eine im Wesentlichen quer zur Umfangsrichtung des Fahrzeugrades verlaufenden Traktionsstrang ist auf diese Weise eine maximale Verbesserung der Traktion durch das Greifglied gewährleistet.

In einer bevorzugten Ausführungsform umschließt das Greifglied beide Längsschenkel eines auf der Lauffläche des Reifens angeordneten Kettengliedes der Gleitschutzkette. Auf diese Weise bildet das U-förmige Unterteil des Greifgliedes auf der Lauffläche des Fahrzeugreifens eine Auflage, die ein Verdrehen bzw. Verkippen des von dem Greifglied umschlossenen Kettenstranges begrenzt. Des Weiteren ist das Greifglied bei dieser vorteilhaften Ausgestaltung nicht auf Zug beansprucht, so dass auch bei zunehmendem Verschleiß des Greifsteges nicht mit einem Versagen des Greifgliedes bzw. der Gleitschutzkette zu rechnen ist.

In einer weiteren vorteilhaften Ausgestaltung kann die Gleitschutzkette ein Laufnetz aufweisen, das neben einer Vielzahl von Traktionssträngen wenigstens einen im montierten Zustand der Gleitschutzkette im Wesentlichen in Umfangsrichtung des Fahrzeugreifens verlaufenden Spurstrang umfasst. Insbesondere bei weichem Untergrund führt ein Spurstrang dazu, dass der Fahrzeugreifen seine Laufrichtung leichter und stabiler beibehält und somit der Geradeauslauf des Fahrzeuges verbessert ist.

Das Laufnetz kann über an den Flanken der Fahrzeugreifen angeordnete Seitenspannstränge auf dem Reifen gesichert werden. Spannkräfte der Seitenspannstränge können über Halteknotenstellen in das Laufnetz eingeleitet werden, die im Bereich der Reifenflanke oder der Reifenschulter angeordnet sein können.

In einer weiteren vorteilhaften Ausgestaltung der erfindungsgemäßen Gleitschutzkette kann der wenigstens eine Spurstrang mit wenigstens einem Greifglied versehen sein. Insbesondere ein Greifglied, das die Längsschenkel eines parallel zur Lauffläche angeordneten Kettengliedes des Spurstranges umfasst, kann durch den bei dieser Anordnung quer zur Umfangsrichtung angeordneten und sich von der Lauffläche weg erstreckenden Greifsteg die Traktion deutlich verbessern. Somit erfüllt der Spurstrang neben einer spurstabilisierenden Funktion auch eine traktionserhöhende Funktion eines Traktionsstrangs.

Um eine stabile Anordnung des Spurstranges auf der Lauffläche zu gewährleisten, kann gemäß einer weiteren vorteilhaften Ausgestaltung jedes Ende eines Spurstranges an einem Knotenpunkt mit wenigstens zwei Traktionssträngen verbunden sein. Um ausreichend große Winkel zwischen den verbundenen Kettensträngen zu ermöglichen, können die Knotenpunkte von Ringgliedern gebildet sein.

Für eine weitere Verbesserung der Spurtreue eines mit der erfindungsgemäßen Gleitschutzkette ausgestatteten Reifens können bei einem Laufnetz mit wenigstens zwei Spursträngen die Spurstränge in Umfangsrichtung miteinander fluchten.

Die Spurtreue und die Laufruhe können gemäß einer weiteren Verbesserung der erfindungsgemäßen Gleitschutzkette erhöht werden, indem der wenigstens eine Spurstrang eine in Umfangsrichtung durchgängige Spurlinie bildet. Bevorzugt kann die erfindungsgemäße Gleitschutzkette ein leiterförmiges Laufnetz aufweisen, das neben zwei in Umfangsrichtung verlaufenden, durchgängigen Spursträngen eine Vielzahl von sich quer zur Umfangsrichtung über die Lauffläche erstreckenden Traktionssträngen umfasst, durch welche die Spurstränge miteinander verbunden sind.

Um insbesondere bei grobstolligen Reifen die Neigung der Gleitschutzkette, in die Rillen zwischen den Stollen einzutauchen zu verringern, kann gemäß einer weiteren vorteilhaften Ausgestaltung ein Laufnetz mit einer im Wesentlichen sechseckigen Struktur vorgesehen sein. So können Spurstränge und Traktionsstränge des Laufnetzes unter Bildung von geschlossen Sechsecken miteinander verbunden sein, wobei die Ecken der Sechsecke zur Verbindung der Spurstränge und Traktionsstränge von Ringgliedern gebildet sind.

Für eine verbesserte Spurtreue eines mit einer erfindungsgemäßen Gleitschutzkette versehenen Fahrzeugreifens können die von Einzelsträngen des Laufnetzes gebildeten Sechsecke symmetrisch zu einer Mittenebene der Lauffläche angeordnet sein.

In einer weiteren vorteilhaften Ausgestaltung der erfindungsgemäßen Gleitschutzkette können jeweils zwei Kettenstränge des Laufnetzes über einen Knotenpunkt mit einem Leiterstrang verbunden sein, der an einem an einer Reifenflanke angeordneten Seitenspannstrang befestigt ist. Dies führt zu einer verbesserten Beweglichkeit der Gleitschutzkette gegenüber dem Reifen. Der Leiterstrang, der von einem einzelnen, einstrangigen Ketten- oder Seilstrang gebildet sein kann, kann sich im montierten Zustand der Gleitschutzkette insbesondere in radialer Richtung entlang der Reifenflanke erstrecken. Auf diese Weise wird die an der Auflagefläche des Reifens durch das Fahrzeuggewicht hervorgerufene Radiusverkürzung auf den Seitenspannstrang übertragen und so die Walkbewegung des Reifens optimal an die Gleitschutzkette weitergeleitet.

Für eine einfachere und kostengünstigere Gestaltung der Gleitschutzkette oder um eine Gleitschutzkette für Fahrzeugreifen mit einem niedrigen Querschnitt zu schaffen, können in einer weiteren vorteilhaften Ausgestaltung wenigstens zwei Traktionsstränge des Laufnetzes jeweils über eine Halteknotenstelle unmittelbar mit einem an einer Reifenflanke angeordneten Seitenspannstrang verbunden sein.

Um ein Verdrehen der mit Greifbolzen versehenen Kettenglieder auf der Lauffläche zu vermeiden, können diese als gedrehte Kettenglieder ausgestaltet sein. Durch das Verdrehen der Kettenglieder entsteht in einer Seitenansicht ein im Wesentlichen achtförmiges Profil, bei dem sich diagonal gegenüberliegende Enden der Längsschenkel eines Kettengliedes jeweils von der Lauffläche weg oder zur Lauffläche hin erstrecken. Gedrehte Kettenglieder bilden somit an ihren die Längsschenkel verbindenden Bögen diagonal gegenüberliegende Auflageflächen, durch welche die Kette insgesamt drehsteifer und somit gegen ein Verkippen auf der Lauffläche gesichert ist. Die Greifbolzen können vorzugsweise an sich diagonal gegenüberliegende Enden der Längsschenkel auf der der Fahrbahn zugewandten Seite der Kettenglieder angeordnet werden. Auf diese Weise kommen, auch bei einem aus gedrehten Kettengliedern gebildeten Kettenstrangs, sich diagonal gegenüberliegende Greifbolzen gleichzeitig auf der Fahrbahn zu liegen.

In einer weiteren vorteilhaften Ausgestaltung der erfindungsgemäßen Gleitschutzkette können die sich von der Lauffläche weg erstreckenden Enden der Längsschenkel der gedrehten Kettenglieder jeweils mit einem Greifbolzen versehen sein. Auf diese Weise ist sichergestellt, dass ein aus gedrehten Kettengliedern gebildeter Strang des Laufnetzes der Gleitschutzkette nur im Bereich der Greifbolzen auf der Fahrbahn aufliegt, während andere Bereiche der Kettenglieder vor einem Verschleiß geschützt sind.

Um die Gleitschutzkette insgesamt kostengünstiger zu gestalten, können Traktionsstränge, die sich über die Reifenschulter bis auf die Reifenflanke erstrecken, beispielsweise um das Laufnetz mit einem Seitenspannstrang zu verbinden, wenigstens abschnittsweise keine Greifbolzen aufweisen. Da an der Reifenschulter oder Reifenflanke angeordnete Bereiche der Gleitschutzkette üblicherweise nicht mit der Fahrbahn in Berührung kommen, können gleichermaßen gute Eigenschaften der Gleitschutzkette bei geringeren Kosten erreicht werden.

Um eine einfache Verstellmöglichkeit zur Verstellung der Länge eines Seitenspannstranges bereitzustellen, kann der Seitenspannstrang wenigstens ein Verstellglied zur Einstellung der Länge des Seitenspannstranges mit einem Langloch zur verschieblichen Aufnahme eines ersten benachbarten Kettengliedes und einer parallel zum Langloch zwischen den Enden des Langlochs angeordnete Öffnung zur drehbaren Aufnahme eines zweiten benachbarten Kettengliedes umfassen. Indem das Verstellglied gegenüber dem zweiten benachbarten Kettenglied verdreht wird, kann das erste benachbarte Kettenglied von einem Ende des Langlochs in das gegenüberliegende Ende des Langlochs verlagert werden.

Die Öffnung zur drehbaren Aufnahme des zweiten Kettengliedes kann vorzugsweise zu einem Ende des Langlochs hin verlagert sein, und zwei unterschiedliche Längeneinstellungen durch das Verstellglied zu realisieren. Die Enden des Langlochs können sich jeweils von der Öffnung zur Aufnahme des zweiten Kettengliedes weg erstrecken, so dass die jeweils eingestellte Position des Verstellgliedes nach dem Auflegen einer Spannung auf den Seitenspannstrang erhalten bleibt. Das Langloch kann vorzugsweise bogenförmig ausgestaltet sein, um ein Drehen des Verstellgliedes und ein gleichzeitiges Verschieben des ersten Kettengliedes in dem Langloch zu erleichtern. Auf der konkaven Seite des Langlochs kann eine Aufnahme für ein Werkzeug vorgesehen sein. Vorzugsweise ist das Verstellglied im Sinne einer kostengünstigen Fertigung aus einem Stanzblech gefertigt.

Im Folgenden wird die Erfindung anhand unterschiedlicher Ausführungsformen mit Bezug auf die Figuren beispielhaft erläutert. Dabei stellen die beschriebenen Ausführungsformen lediglich mögliche Ausgestaltungen dar, die für den jeweiligen Anwendungsfall modifiziert werden können. Einzelne, für sich vorteilhafte Merkmale können gemäß der obigen Beschreibung der vorteilhaften Ausgestaltungen bei der jeweils beschriebenen Ausführungsform hinzugefügt oder weggelassen werden. Es zeigen:
- Fig. 1: eine schematische Seitenansicht eines Fahrzeugrades, auf das ein erstes Ausfüh- rungsbeispiel einer erfindungsgemäßen Gleitschutzkette aufgelegt ist;
- Fig. 2: eine schematische perspektivische Teilansicht eines Laufnetzes des Ausführungs- beispiels der Fig. 1;
- Fig. 3: eine schematische Draufsicht auf einen Ausschnitt einer erfindungsgemäßen Gleit- schutzkette gemäß dem Ausführungsbeispiel der Fig. 1;
- Fig. 4: eine schematische Darstellung eines Ausschnitts eines zweiten Ausführungsbei- spiels einer erfindungsgemäßen Gleitschutzkette;
- Fig. 5: eine schematische Darstellung eines Ausschnitts einer dritten erfindungsgemäßen Gleitschutzkette.

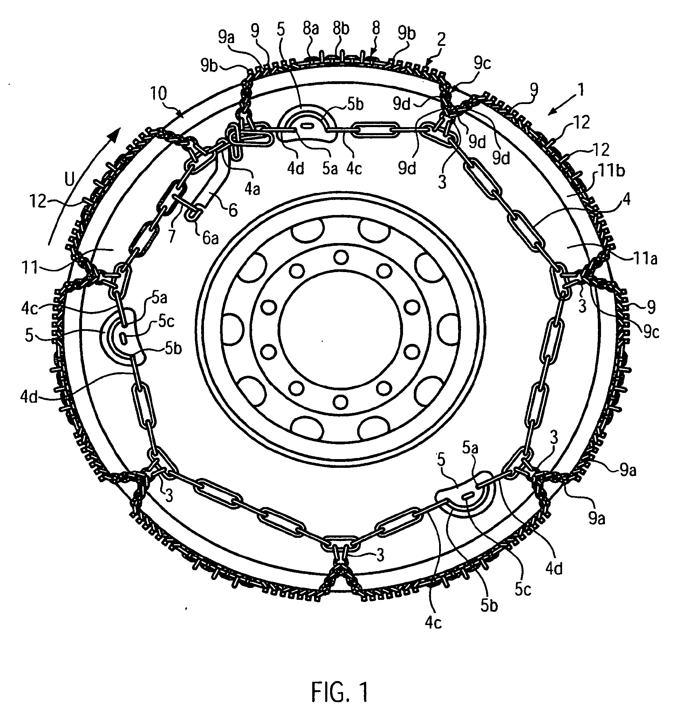

Zunächst wird der Aufbau einer erfindungsgemäßen Gleitschutzkette mit Bezug auf das Ausführungsbeispiel der Fig. 1 beschrieben.

Die erfindungsgemäße Gleitschutzkette 1 weist ein Laufnetz 2 auf, das über Halteknotenstellen 3 mit einem Seitenspannstrang 4 verbunden ist. Die Gleitschutzkette 1 ist auf der verdeckten Seite des Fahrzeugrades mit einem zweiten, geschlossenen Seitenspannstrang versehen, dessen Länge bzw. Umfang an die Größe des Fahrzeugreifens angepasst ist. Zur Verstellung seiner Länge ist der Seitenspannstrang mit Verstellgliedern 5 ausgestattet, durch deren Verdrehen eine Verlagerung der angeschlossenen Kettenglieder und somit eine Verkürzung oder Verlängerung des Seitenspannstranges erreicht werden kann. An einem Ende des Seitenspannstranges ist ein Spannhebel 6 angeordnet, der zum Spannen des Seitenspannstranges 4 in ein Kettenglied des im montierten Zustand der Gleitschutzkette 1 gegenüberliegenden Endes des Seitenspannstranges eingeführt und anschließend in ein Sicherungsglied 7 eingehängt wird.

Das Laufnetz 2 weist in Umfangsrichtung U verlaufende Spurstränge 8 auf, die über schräg zur Umfangsrichtung U verlaufende Traktionsstränge 9 mit dem Seitenspannstrang 4 verbunden sind. Die Spurstränge 8 umfassen senkrecht zur Lauffläche 10 des Fahrzeugreifens 11 angeordnete, stehende Kettenglieder 8a und parallel zur Lauffläche 10 des Fahrzeugreifens 11 angeordnete, liegende Kettenglieder 8b. Die parallel zur Lauffläche 10 angeordneten Kettenglieder 8b, deren Längsschenkel eine im Wesentlichen parallel zur Lauffläche verlaufende Ebene aufspannen, sind von einem Greifglied 12 umschlossen, das mit einem sich im montierten Zustand von der Lauffläche 10 weg erstreckenden Greifsteg versehen ist. Die Greifstege 12 verlaufen quer zur Umfangsrichtung U und bilden somit schaufelartige Fortsätze an der Lauffläche 10, die während des Einsatzes der Gleitschutzkette 1 flächenförmig, als Schaufel auf den Fahrbahnuntergrund einwirken. Die Spurstränge 8 erfüllen folglich auch die Funktion von Traktionssträngen, indem sie die Traktion des Fahrzeugreifens 11 im Betrieb insbesondere auf weichem Untergrund deutlich verbessern.

Die Traktionsstränge 9 umfassen gedrehte Kettenglieder 9a, die jeweils an den von der Lauffläche 10 des Reifens 11 weg weisenden Enden ihrer Längsschenkel mit Greifbolzen 9b ausgestattet sind. Sich über die Reifenflanke 11 a erstreckende Enden 9c der Traktionsstränge 9 weisen gegenüber den auf der Lauffläche 10 und an der Reifenschulter 11 b angeordneten Abschnitten der Traktionsstränge keine Greifbolzen 9b auf. Ein Ende 9c eines Traktionsstranges 9 besteht dabei jeweils aus zwei gedrehten Kettengliedern 9d ohne Greifbolzen. Jeweils das von der Lauffläche 10 weg weisende Kettenglied 9d ist in einen Halteknoten 3 eingesetzt. Die Halteknotenstellen 3 sind von aus Draht geformten, im wesentlichen U-förmigen Bügeln gebildet, deren Schenkel die lichte Weite eines Kettengliedes des Seitenspannstranges 4 durchdringen und in Richtung einer bogenförmigen Aufnahme der als Bügel geformten Halteknotenstelle 3 zurückgebogen sind.

Der Seitenspannstrang 4 weist insgesamt drei Verstellglieder 5 auf, über die die Länge des Seitenspannstranges variiert werden kann. Eine erste Längeneinstellung des Seitenspannstranges 4 erfolgt nach dem Auflegen oder Montieren der Gleitschutzkette 1, indem der Spannhebel 6 in ein als Verbindungsglied 4a dienendes Kettenglied des im montierten Zustand dem Spannhebel 6 gegenüberliegenden Endes des Seitenspannstranges 4 eingesetzt wird. Anschließend wird der Spannhebel 6 in Richtung des mit ihm verbundenen Endes des Seitenspannstranges 4 zurückgedreht, bis das Sicherungsglied 7 in eine hakenförmige Aufnahme 6a des Spannhebels 6 zur Sicherung der Position des Spannhebels 6 eingesetzt werden kann.

Nach einer Vorspannung des Seitenspannstranges 4 über den Spannhebel 6 kann die Länge des Seitenspannstranges 4 über die drei über den Umfang des Seitenspannstranges verteilten Verstellglieder 5 eingestellt werden. Zur Einstellung des Abstandes zwischen einem ersten mit einem Verstellglied verbundenen Endglied 4b des Seitenspannstranges 4 und einem zweiten mit dem Verstellglied 5 verbundenen Kettenglied 4 des Seitenspannstranges 4 ist das erste Kettenglied 4c in einem bogenförmigen Langloch 5b des Verstellgliedes 5 angeordnet, während das zweite Kettenglied 4d in einer im Wesentlichen runden Öffnung 5a des Verstellgliedes 5 drehbar gelagert ist. Die drei Verstellglieder 5 sind jeweils in einer Position gezeigt, in welcher der Seitenspannstrang 4 verlängert ist.

Um den Seitenspannstrang 4 zu verkürzen, können eines oder mehrere der drei Verstellglieder 5 im Uhrzeigersinn verdreht und das erste angeschlossene Kettenglied 4d entsprechend in dem Langloch 5b verschoben werden. ln einer Endposition, in der das Verstellglied 5 um etwa 180° im Uhrzeigersinn verdreht ist, kommt das Kettenglied 4d an dem gegenüberliegenden Ende des Langlochs 5b zu liegen, das einen deutlich geringeren Abstand zur Öffnung 5a aufweist. Folglich ist in einer verdrehten Position des Verstellgliedes 5 der Abstand zwischen dem ersten mit dem Verstellglied 5 verbundenen Kettenglied 4c und dem zweiten mit dem Verstellglied 5 verbundenen Kettenglied 4d deutlich verringert und die Länge des Seitenspannstranges verkürzt.

Durch die Verteilung der Verstellglieder 5 über den Umfang des Seitenspannstranges 4 mit einem Winkel von etwa 120° zwischen zwei Verstellgliedern 5, können leichte Verlagerungen der Gleitschutzkette 1 auf dem Fahrzeugreifen 11, die beispielsweise beim Auflegen der Gleitschutzkette 1 entstehen können, ausgeglichen werden. Um die Verstellglieder über ein Werkzeug, beispielsweise einen Schraubenzieher, verdrehen zu können, weisen diese jeweils auf einer konkaven Seite des bogenförmigen Langlochs 5b angeordnete Schnittstelle 5c auf, die von einer im Wesentlichen ovalen Öffnung gebildet ist. Alternativ kann durch den Einsatz eines entsprechend als Hebel ausgestalteten, sich parallel zur Reifenflanke 11a erstreckenden Werkzeugs in die Schnittstelle 5c kann das Verdrehen des Verstellgliedes 5 erleichtert werden. Da sich beide Enden des Langlochs 5b von der Öffnung 5a weg erstrecken, ist das Verstellglied sowohl in der gezeigten verlängerten Position als auch in einer verkürzten Position gegen Verdrehen gesichert, solange eine Zugspannung in dem Seitenspannstrang 4 vorhanden ist.

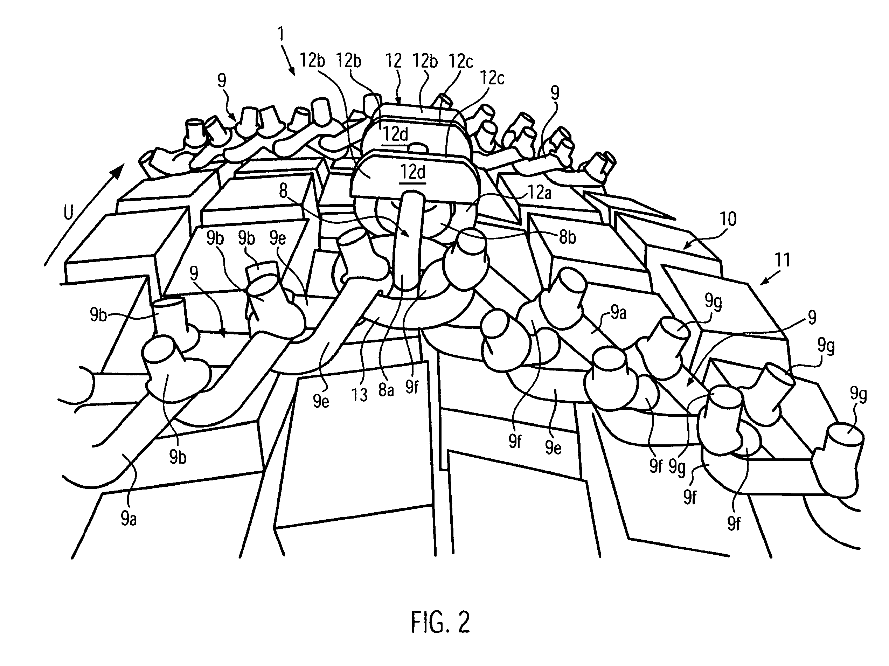

Fig. 2 ist eine perspektivische Ansicht eines Ausschnitts der Lauffläche 10 des Fahrzeugreifens 11. Der Spurstrang 8 ist an jeden seiner in oder entgegen der Umfangsrichtung U weisenden Enden über einen Knotenpunkt 13, der als Ringlied ausgestaltet ist, mit jeweils zwei Traktionssträngen 9 verbunden. Die Traktionsstränge 9 bestehen aus gedrehten Kettengliedern 9a, deren Längsschenkel sich im Wesentlichen in entgegengesetzte Richtungen von der Lauffläche 10 weg erstrecken. Jeweils an einem von der Lauffläche 10 weg weisenden Ende eines Längsschenkels 9e oder an einem sich von der Lauffläche 10 weg erstreckenden Übergang zwischen einem Längsschenkel 9e und einem Bogen 9f sind Greifbolzen 9b angeordnet, die jeweils über eine Schweißverbindung mit dem gedrehten Kettenglied 9a verbunden sind. Um die Auflagefläche der Greifbolzen auf dem gedrehten Kettenglied 9a zu vergrößern, weisen die Greifbolzen 9b an ihrem dem Kettenglied 9a zugewandten Ende Verbreiterungen 9g auf, deren auf dem Kettenglied 9a aufliegende Flächen zumindest im unverschweißten Zustand der Greifbolzen 9b an die darunterliegende Kontur des gedrehten Kettengliedes 9a angepasst sind.

Die Greifbolzen 9b wirken punktförmig, als Kralle auf den die Fahrbahn bildenden Untergrund. Die Greifbolzen 9b weisen dazu eine im Wesentlichen kreisförmige Stirnfläche 9g auf, die sich von der Lauffläche 10 des Fahrzeugreifens 11 weg bzw. während des Abrollens des Fahrzeugreifens 11 zeitweise zur Fahrbahn hin erstreckt. Somit konzentriert sich die über die Greifbolzen 9b auf die Fahrbahn übertragene Auflagerkraft jeweils auf einen Punkt der Fahrbahn. Diese punktförmige Konzentration der Auflagerkraft erleichtert ein Eindringen in den Untergrund und somit ein Festkrallen des Fahrzeugreifens 11 über die Gleitschutzkette 1.

Der Spurstrang 8 ist an seinen parallel zur Lauffläche 10 angeordneten oder liegenden Kettengliedern 8b mit Greifgliedern 12 versehen, die jeweils die zwei Längsschenkel eines liegenden Kettengliedes 8b umschließen. Auf der der Lauffläche 10 zugewandten Seite weisen die Greifglieder 12 jeweils einen im Wesentlichen U-förmigen Bogen 12a auf, dessen Form im Wesentlichen einer Hälfte eines in Längsrichtung geteilten Kettengliedes entspricht. Auf der von der Lauffläche 10 weg weisenden Seite eines Greifliedes 12 ist ein mit dem Bogen 12a verschweißter Greifsteg 12b angeordnet, der sich von der Lauffläche 10 weg erstreckt. Die Greifstege 12b sind deutlich breiter als die Schenkel der Kettenglieder der Gleitschutzkette dimensioniert.

Die von der Lauffläche 10 des Fahrzeugreifens 11 weg weisenden oder der Fahrbahn zugewandten Schmalseiten 12c der Greifstege 12b setzen während des Einsatzes der Gleitschutzkette 1 flächig, streifenförmig oder linienförmig auf dem Untergrund auf. Anschließend dringen die Greifstege 12b, insbesondere bei weichem Untergrund, in den Untergrund ein. Die im Wesentlichen quer zur Lauffläche verlaufenden Breitseiten 12d der Greifstege 12b wirken im Folgenden flächenförmig, als Schaufel auf den Fahrbahnuntergrund. Indem die Spurstränge 8 die Traktion des Fahrzeugreifens 11 im Betrieb insbesondere auf weichem Untergrund deutlich verbessern, wirken diese folglich auch als Traktionsstränge.

Da lediglich die Greifstege 12b der Spurstränge 8 mit der Fahrbahn in Berührung bringen, ist auch der Verschleiß der Spurstränge 8 im Wesentlichen auf die Greifstege 12 begrenzt. Die Verschleißfestigkeit der Greifstege 12b und somit der Gleitschutzkette 1 kann durch eine breitere Dimensionierung der Greifstege 12b, einer Härtung der Greifstege 12b oder durch Aufschweißen einer hoch verschweißfesten Auflage auf die Greifstege 12b erreicht werden.

Das Verschleißvolumen des Greifsteges 12b ist des Weiteren dadurch erhöht, dass die nach außen weisenden Radien des Greifsteges kleiner dimensioniert sind als die nach außen weisenden Radien der U-förmigen Bögen 12a bzw. der Kettenglieder 8a, 8b des Spurstranges 8.

Um die Griffigkeit des Greifsteges 12b zu vergrößern, kann insbesondere die Geometrie der von der Lauffläche 10 weg weisenden Seite der Greifstege 12b verändert werden, beispielsweise indem Höcker oder Rillen vorgesehen werden.

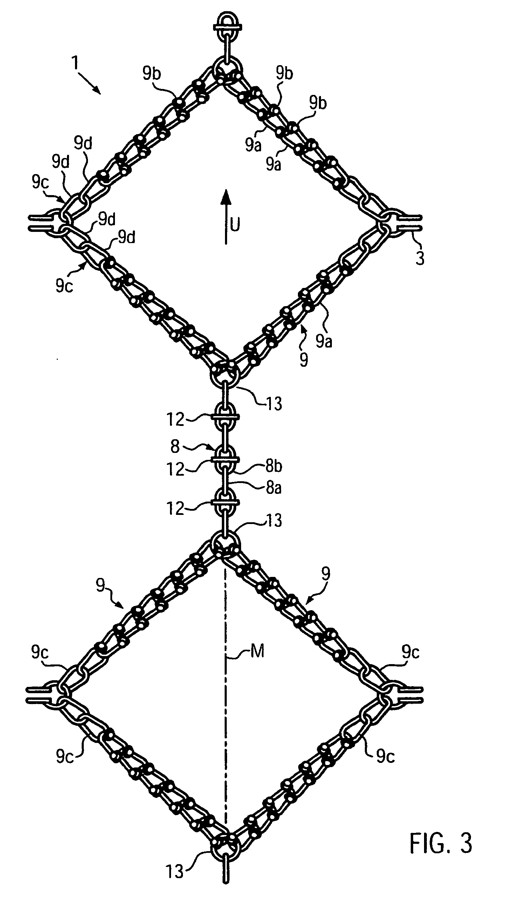

Fig. 3 ist eine schematische Draufsicht auf einen Ausschnitt einer erfindungsgemäßen Gleitschutzkette 1. Die mit Greifgliedern 12 versehenen Spurstränge 8 sind im montierten Zustand der Gleitschutzkette 1 auf einer Mittenebene M des Fahrzeugreifens 11 angeordnet. Indem die Spurstränge 12 in Umfangsrichtung U miteinander fluchten, ist die Spurtreue des Fahrzeugrades mit erfindungsgemäßer Gleitschutzkette 1 verbessert. Die schräg zur Umfangsrichtung U verlaufenden Traktionsstränge 9, die jeweils paarweise über als Ringlieder ausgestaltete Knotenpunkte 13 mit den Spursträngen 8 verbunden sind, sorgen hingegen mit den aufgeschweißten Greifbolzen 9b insbesondere auf weichem Untergrund für eine deutlich verbesserte Traktion. Die Traktion wird des Weiteren durch eine keilförmige Anordnung der Traktionsstränge 9 verbessert, die durch die Anordnung der Traktionsstränge 9 schräg zur Umfangsrichtung und die Verbindung zweier Traktionsstränge 9 an der Mittenebene M durch den Knotenpunkt 13 entsteht.

Jeweils vier zwischen zwei Spursträngen 8 angeordnete Traktionsstränge 9 bilden ein Parallelogramm, das jeweils durch zwei Halteknotenstellen 3 und zwei Knotenpunkte 13 aufgespannt wird. Die Spurstränge 12 formen jeweils mit auf einer Seite des Reifens 11 angeordneten Traktionssträngen 9 und einem zwischen diesen Traktionssträngen 9 angeordneten Abschnitt des Seitenspannstranges 4 ein trapezförmiges Viereck.

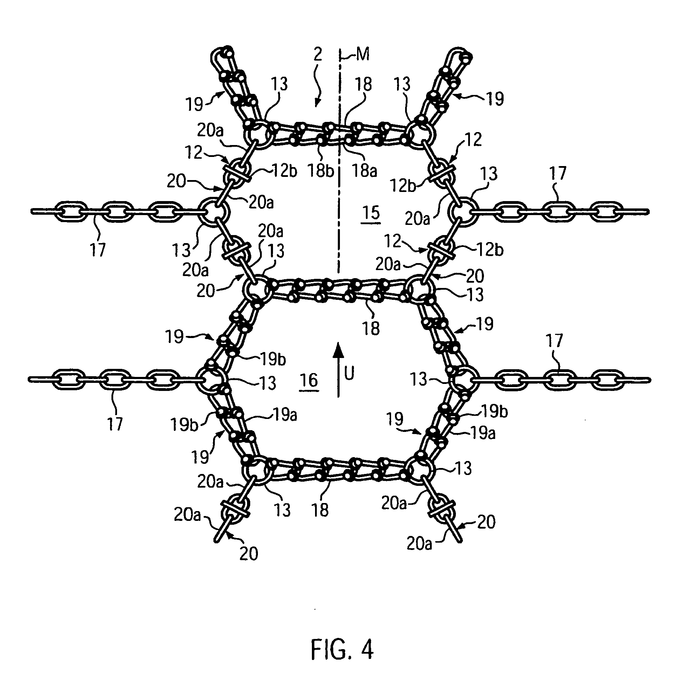

Fig. 4 zeigt eine schematische Darstellung eines Ausschnitts eines zweiten Ausführungsbeispiels einer erfindungsgemäßen Gleitschutzkette, wobei für Elemente, die in Funktion und Aufbau den Elementen der Ausführungsbeispiele der Fig. 1 bis 3 entsprechen, dieselben Bezugszeichen verwendet werden. Der Kürze halber wird auf die Unterschiede zum Ausführungsbeispiel der Fig. 1 bis 3 eingegangen..

Der Ausschnitt der Gleitschutzkette ist in einer ausgebreiteten Stellung gezeigt. Die Gleitschutzkette weist unterschiedlich ausgestaltete Waben 15, 16 auf, die abwechselnd aufeinanderfolgend auf der Lauffläche des Fahrzeugreifens angeordnet werden. Über Leiterstränge 17 werden die Waben 15 und 16 mit vorzugsweise an der Flanke des Fahrzeugreifens angeordneten Seitenspannsträngen verbunden. Die Waben 15 und 16 sind jeweils aus sechs Teilsträngen gebildet, wobei quer zur Umfangsrichtung U verlaufende Querstränge 18 jeweils zwei Waben 15,16 begrenzen.

Die Querstränge 18 weisen gedrehte Kettenglieder 18a mit Greifbolzen 18b auf. Quer zur Umfangsrichtung U bzw. seitlich sind die Waben 15 und 16 durch Seitenstränge 19 und 20 begrenzt, die im montierten Zustand im Wesentlichen in Umfangsrichtung U geradlinig verlaufen und somit Spurstränge bilden oder in Umfangsrichtung U zickzackförmig verlaufen und Traktionsstränge bilden können. Während die Seitenstränge 19 der Wabe 16 von gedrehten Kettengliedern 19a gebildet sind, die an ihren von der Lauffläche weg weisenden Enden jeweils Greifbolzen 19b aufweisen, umfassen die Seitenstränge 20 der Wabe 15 unverdrehte Kettenglieder 20a und jeweils ein Greifglied 12 mit einem sich von der Lauffläche weg erstreckenden Greifsteg 12b. Die Seitenstränge 19 und 20 umfassen dabei jeweils drei Kettenglieder und sind jeweils mit den benachbarten Seitensträngen 19, 20, den Leitersträngen 17 und den Quersträngen 18 über als Ringglieder ausgestaltete Knotenpunkte 13 verbunden.

Die Gesamtlänge der hintereinander gereihten Seitenstränge 19, 20 ist vorzugsweise länger als der Umfang des Fahrzeugreifens und verläuft im montierten Zustand, wie in Fig. 4 gezeigt, zickzackförmig. Die schräg zur Umfangsrichtung U verlaufenden Seitenstränge 19, 20 bilden somit Traktionsstränge 19, 20.

Die Gesamtlänge von hintereinander angeordneten Seitensträngen 19 und 20 kann in einer weiteren vorteilhaften Ausgestaltung der Gleitschutzkette etwa dem Umfang der Lauffläche des Fahrzeugreifens entsprechen. Somit verlaufen die Seitenstränge 19 und 20 bei montierter Gleitschutzkette im Wesentlichen in Umfangsrichtung U. Jeweils in Umfangsrichtung U hintereinander angeordnete Seitenstränge 19 und 20 bilden in dieser Ausführungsform hintereinander gereihte Spurstränge oder einen den Fahrzeugreifen vollständig umschließenden, durchgehenden Spurstrang. Das Laufnetz 2 kann somit zwei durchgehende, auf dem Fahrzeugreifen symmetrisch zur Mittenebene M angeordnete Spurstränge umfassen, welche die Spurtreue des Fahrzeugrades deutlich verbessern.

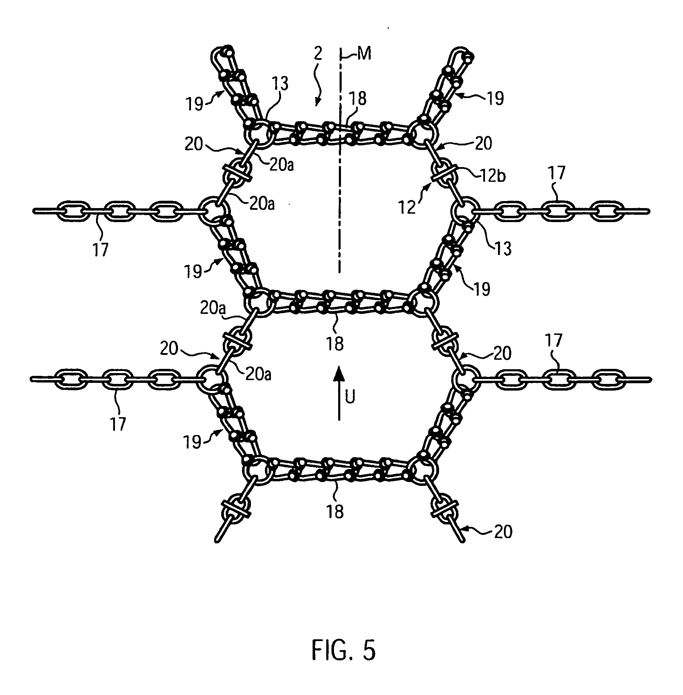

Fig. 5 zeigt ein dritten Ausführungsbeispiel einer erfindungsgemäßen Gleitschutzkette, wobei für Elemente, die in Funktion und Aufbau den Elementen der Ausführungsbeispiele der Fig. 1 bis 4 entsprechen, dieselben Bezugszeichen verwendet werden. Der Kürze halber wird auf die Unterschiede zum Ausführungsbeispiel der Fig. 4 eingegangen.

Wie das Laufnetz der Fig. 4 weist auch das Laufnetz der Fig. 5 im Wesentlichen sechseckige Waben auf, deren Kettenstränge 18, 19 und 20 über als Ringglieder ausgestaltete Knotenpunkte 13 miteinander verbunden sind, welche die Ecken einer im Wesentlichen sechseckigen Struktur bilden. Im Gegensatz zu den Waben des Ausführungsbeispiels der Fig. 4 weisen die Waben des Ausführungsbeispiels der Fig. 5 nicht jeweils nur eine Art von Seitensträngen 19 oder 20 auf, sondern sind jeweils mit Seitensträngen 19 aus gedrehten Kettengliedern 9a mit Greifbolzen 9b sowie aus Seitensträngen mit Greifgliedern 12 zusammengesetzt. Bei dieser Anordnung sind die Greifglieder 12 und somit die Greifstege 12b gleichmäßiger über den Umfang des Fahrzeugreifens verteilt, so dass eine gleichmäßigere Wirkung der Greifstege 12b und somit eine erhöhte Laufruhe zu erwarten ist.

## Patentansprüche

1. Gleitschutzkette (1), mit einer Vielzahl von im Wesentlichen schräg bis quer zur Umfangsrichtung (U) eines Fahrzeugreifens (11) verlaufenden Traktionssträngen (9, 18, 19, 20), die Kettenglieder (9a, 18a, 19a) umfassen, die jeweils an wenigstens einem Schenkel (9e) mit einem sich im montierten Zustand der Gleitschutzkette (1) von einer Lauffläche (10) weg erstreckenden, punktuell auf die Fahrbahn aufsetzend und als Kralle auf die Fahrbahn wirkend ausgestalteten Greifbolzen (9b) versehen sind, wobei die Gleitschutzkette (1) wenigstens ein Greifglied (12) mit einem sich im montierten Zustand von der Lauffläche (10) weg erstreckenden Greifsteg (12b) aufweist, welcher flächig auf die Fahrbahn aufsetzend und als Schaufel auf die Fahrbahn wirkend ausgestaltet ist, **dadurch gekennzeichnet, dass** das Greifglied (12) beide Längsschenkel eines liegenden Kettengliedes (8a) der Gleitschutzkette (1) umschließt.

2. Gleitschutzkette (1) nach Anspruch 1, **dadurch gekennzeichnet, dass** die Gleitschutzkette (1) ein Laufnetz (2) mit wenigstens einem in montiertem Zustand der Gleitschutzkette (1) im Wesentlichen in Umfangsrichtung (U) des Fahrzeugreifens (11) verlaufenden Spurstrang (8) umfasst.

3. Gleitschutzkette (1) nach Anspruch 1 oder 2, **dadurch gekennzeichnet, dass** der wenigstens eine Spurstrang (8) mit wenigstens einem Greifglied (12) versehen ist.

4. Gleitschutzkette (1) einem der Ansprüche 2 oder 3, **dadurch gekennzeichnet, dass** jedes Ende eines Spurstranges (8) an einem Knotenpunkt (13) mit wenigstens zwei Traktionssträngen (9) verbunden ist, wobei die Knotenpunkte (13) von Ringgliedern gebildet sind.

5. Gleitschutzkette (1) nach einem der Ansprüche 2 bis 4, **dadurch gekennzeichnet, dass** die Gleitschutzkette (1) wenigstens zwei Spurstränge (8) umfasst, die in Umfangsrichtung (U) miteinander fluchten.

6. Gleitschutzkette (1) nach einem der Ansprüche 2 bis 5, **dadurch gekennzeichnet, dass** die Kettenstränge (18, 19, 20) des Laufnetzes (2) unter Bildung von geschlossenen Sechsecken miteinander verbunden sind, wobei die Ecken der Sechsecke von Ringgliedern (13) gebildet sind.

7. Gleitschutzkette (1) nach einem der Ansprüche 2 bis 6, **dadurch gekennzeichnet, dass** die Sechsecke symmetrisch zu einer Mittenebene (M) der Lauffläche angeordnet sind.

8. Gleitschutzkette (1) nach einem der Ansprüche 1 bis 7, **dadurch gekennzeichnet, dass** jeweils zwei Kettenstränge (19, 20) des Laufnetzes (2) über einen Knotenpunkt (13) mit einem Leiterstrang (17) verbunden sind, der an einem an einer Reifenflanke (11a) angeordneten Seitenspannstrang (4) befestigt ist.

9. Gleitschutzkette (1) nach einem der Ansprüche 1 bis 8, **dadurch gekennzeichnet, dass** wenigstens zwei Traktionsstränge (9) des Laufnetzes (2) jeweils über eine Halteknotenstelle (3) unmittelbar mit einem an einer Reifenflanke (11a) angeordneten Seitenspannstrang (4) verbunden sind.

10. Gleitschutzkette (1) nach einem der Ansprüche 1 bis 9, **dadurch gekennzeichnet, dass** wenigstens die mit Greifbolzen (9b) versehenen Kettenglieder (9a) als gedrehte Kettenglieder (9a) ausgestaltet sind.

11. Gleitschutzkette (1) nach Anspruch 10, **dadurch gekennzeichnet, dass** an diagonal gegenüberliegenden Enden wenigstens eines gedrehten Kettengliedes (9a) jeweils ein Greifbolzen (9b) befestigt ist.

12. Gleitschutzkette (1) nach einem der Ansprüche 1 bis 11, **dadurch gekennzeichnet, dass** sich über die Reifenschulter (11 b) bis auf die Reifenflanke (11a) erstreckende Enden der Traktionsstränge (9) wenigstens abschnittsweise keine Greifbolzen (9b) aufweisen.

13. Gleitschutzkette (1) nach einem der Ansprüche 9 bis 12, **dadurch gekennzeichnet, dass** der Seitenspannstrang (4) wenigstens ein im Wesentlichen plattenförmiges Verstellglied (5) zur Einstellung der Länge des Seitenspannstrangs (4) mit einem Langloch (5b) zur verschieblichen Aufnahme eines ersten Kettengliedes (4c) und einer parallel zum Langloch (5b) und näher zu einem Ende des Langlochs (5b) angeordnete Öffnung (5a) zur drehbaren Aufnahme eines zweiten Kettengliedes (4d) umfasst.

## Claims

1. Anti-skid chain (1) having a plurality of traction strands (9, 18, 19, 20) which run essentially oblique to transverse to the circumferential direction (U) of a vehicle tyre (11) and which comprise chain links (9a, 18a, 19a) which in each case on at least one leg (9e) are provided with a grip bolt (9b) which extends away from a tyre tread (10) when the anti-skid chain (1) is fitted and which is formed to rest at points on the track and to act as a claw on the track, wherein the anti-skid chain (1) has at least one grip link (12) having a grip web (12b) which extends away from the tyre tread (10) when it is fitted and which is formed to rest in a planar fashion on the track and to act as a shovel on the track, **characterised in that** the grip link (12) encloses both longitudinal legs of a horizontal chain link (8a) of the anti-skid chain (1).

2. Anti-skid chain (1) according to Claim 1, **characterised in that** the anti-skid chain (1) comprises a continuous chain mesh (2) having at least one track strand (8) running essentially in the circumferential direction (U) of the vehicle tyre (11) when the anti-skid chain (1) is fitted.

3. Anti-skid chain (1) according to Claim 1 or 2, **characterised in that** the at least one track strand (8) is provided with at least one grip link (12).

4. Anti-skid chain (1) according to either of Claims 2 and 3, **characterised in that** each end of a track strand (8) is connected to at least two traction strands (9) at a node (13), wherein the nodes (13) are formed by ring links.

5. Anti-skid chain (1) according to any one of Claims 2 to 4, **characterised in that** the anti-skid chain (1) comprises at least two track strands (8) which are in alignment with one another in the circumferential direction (U).

6. Anti-skid chain (1) according to any one of Claims 2 to 5, **characterised in that** the chain strands (18, 19, 20) of the continuous chain mesh (2) are connected to one another by forming closed hexagons, wherein the corners of the hexagons are formed by ring links (13).

7. Anti-skid chain (1) according to any one of Claims 2 to 6, **characterised in that** the hexagons are arranged symmetrically to a central plane (M) of the tyre tread.

8. Anti-skid chain (1) according to any one of Claims 1 to 7, **characterised in that** in each case two chain strands (19, 20) of the continuous chain mesh (2) are connected via a node (13) to a lead strand (17) which is fastened to a side tensioning strand (4) arranged on a tyre wall (11a).

9. Anti-skid chain (1) according to any one of Claims 1 to 8, **characterised in that** at least two traction strands (9) of the continuous chain mesh (2) are in each case directly connected to a side tensioning strand (4) arranged on a tyre wall (11a) via a retaining node (3).

10. Anti-skid chain (1) according to any one of Claims 1 to 9, **characterised in that** at least the chain links (9a) provided with grip bolts (9b) are formed as twisted chain links (9a).

11. Anti-skid chain (1) according to Claim 10, **characterised in that** a grip bolt (9b) is in each case fastened to diagonally opposing ends of at least one twisted chain link (9a).

12. Anti-skid chain (1) according to any one of Claims 1 to 11, **characterised in that** ends of the traction strands (9) extending over the tyre shoulder (11b) up to the tyre wall (11a) at least in sections do not have grip bolts (9b).

13. Anti-skid chain (1) according to any one of Claims 9 to 12, **characterised in that** the side tensioning strand (4) comprises at least one essentially plate-shaped adjusting element (5) for adjusting the length of the side tensioning strand (4) having an oblong hole (5b) for accommodating a first chain link (4c) such that it is displaceable and an opening (5a), which is arranged parallel to the oblong hole (5b) and is closer to one end of the oblong hole (5b), for accommodating a second chain link (4d) such that it is rotatable.

## Revendications

1. Chaîne antidérapante (1) avec une multiplicité de tronçons de traction (9, 18, 19, 20) qui s'étendent globalement en biais à transversalement par rapport au sens circonférentiel (U) d'un pneu de véhicule (11) et qui comprennent des maillons (9a, 18a, 19a) pourvus chacun, sur au moins une branche (9e), d'un ergot d'adhérence (9b) qui s'étend, dans la position montée de la chaîne antidérapante (1), à l'opposé d'une surface de roulement (10) et qui est conçu pour être posé ponctuellement sur la chaussée et pour agir comme un crampon sur celle-ci, étant précisé que la chaîne antidérapante (1) comporte au moins un élément d'adhérence (12) avec une nervure d'adhérence (12b) qui, dans la position montée, s'étend à l'opposé de la surface de roulement (10) et qui est conçue pour être posée à plat sur la chaussée et pour agir comme une ailette sur la chaussée, **caractérisée en ce que** l'élément d'adhérence (12) entoure les deux branches longitudinales d'un maillon horizontal (8a) de la chaîne antidérapante (1).

2. Chaîne antidérapante (1) selon la revendication 1, **caractérisée en ce qu'**elle comprend un filet de roulement (2) avec au moins un tronçon pour bande de roulement (8) qui, dans la position montée de ladite chaîne (1), s'étend globalement dans le sens circonférentiel (U) du pneu (11).

3. Chaîne antidérapante (1) selon la revendication 1 ou 2, **caractérisée en ce que** le ou les tronçons pour bande de roulement (8) sont pourvus d'au moins un élément d'adhérence (12).

4. Chaîne antidérapante (1) selon l'une des revendications 2 ou 3, **caractérisée en ce que** chaque extrémité d'un tronçon pour bande de roulement (8) est reliée au niveau d'un point de jonction (13) à au moins deux tronçons de traction (9), les points de jonction (13) étant formés par des éléments annulaires.

5. Chaîne antidérapante (1) selon l'une des revendications 2 à 4, **caractérisée en ce qu'**elle comprend au moins deux tronçons pour bande de roulement (8) qui sont dans l'alignement l'un de l'autre dans le sens circonférentiel (U).

6. Chaîne antidérapante (1) selon l'une des revendications 2 à 5, **caractérisée en ce que** les tronçons de chaîne (18, 19, 20) du filet de roulement (2) sont reliés entre eux en formant des hexagones fermés, les coins des hexagones étant formés par des élément annulaires (13).

7. Chaîne antidérapante (1) selon l'une des revendications 2 à 6, **caractérisée en ce que** les hexagones sont disposés symétriquement par rapport à un plan médian (M) de la surface de roulement.

8. Chaîne antidérapante (1) selon l'une des revendications 1 à 7, **caractérisée en ce que** deux tronçons de chaîne (19, 20) du filet de roulement (2) sont reliés par l'intermédiaire d'un point de jonction (13) à un tronçon de guidage (17) qui est fixé à un tronçon de tension latéral (4) disposé sur un flanc (11a) du pneu.

9. Chaîne antidérapante (1) selon l'une des revendications 1 à 8, **caractérisée en ce qu'**au moins deux tronçons de traction (9) du filet de roulement (2) sont reliés directement à un tronçon de tension latéral (4) disposé sur un flanc du pneu (11a), par l'intermédiaire d'un point de jonction de fixation (3).

10. Chaîne antidérapante (1) selon l'une des revendications 1 à 9, **caractérisée en ce que** les maillons (9a), au moins, pourvus d'ergots d'adhérence (9b) sont conçus comme des maillons tordus (9a).

11. Chaîne antidérapante (1) selon la revendication 10, **caractérisée en ce qu'**un ergot d'adhérence (9b) est fixé aux extrémités opposées, en diagonale, d'au moins un maillon tordu (9a).

12. Chaîne antidérapante (1) selon l'une des revendications 1 à 11, **caractérisée en ce que** les extrémités des tronçons de traction (9) qui s'étendent jusqu'au flanc (11a) du pneu par l'intermédiaire de l'épaulement (11b) ne présentent pas d'ergot d'adhérence (9b), au moins par endroits.

13. Chaîne antidérapante (1) selon l'une des revendications 9 à 12, **caractérisée en ce que** le tronçon de tension latéral (4) comprend au moins un élément de réglage (5) globalement en forme de plaque pour régler la longueur du tronçon de tension latéral (4), avec un trou oblong (5b) pour recevoir de manière coulissante un premier maillon (4c), et avec une ouverture (5a) disposée parallèlement au trou oblong (5b) et plus près d'une extrémité de celui-ci, pour recevoir de manière tournante un second maillon (4d).
